# FASCICULE DE BREVET EUROPEEN

(11) **EP 4 066 165 B1**
(45) Date de publication et mention de la délivrance du brevet: **17.01.2024**
(21) Numéro de dépôt: 20811400.9
(22) Date de dépôt: 27.11.2020
(51) Int. Cl.: G06M 7/04, B65G 47/26, B65G 43/08

(54) **DISPOSITIF ET PROCEDE DE CONVOYAGE DE PRODUITS**
VORRICHTUNG UND VERFAHREN ZUM FÖRDERN VON PRODUKTEN
DEVICE AND METHOD FOR CONVEYING PRODUCTS

(30) Priorité: 28.11.2019 FR 1913376
(43) Date de publication de la demande: 05.10.2022
(73) Titulaire: SIDEL PARTICIPATIONS, S.A.S., 76930 Octeville-sur-Mer (FR)
(72) Inventeur: HENNINGER, Raphaël, 67116 REICHSTETT (FR)
(74) Mandataire: Sidel Group
(86) Numéro de dépôt international: PCT/EP2020/083664
(87) Numéro de publication internationale: WO 2021/105381

(56) Documents cités:
- WO-A1-2007/000441
- DE-A1-102012 004 473
- JP-A- 2011 088 741
- US-A- 4 635 784

## Description

La présente invention entre dans le domaine du convoyage de produits au sein d'une ligne industrielle.

Au sens de la présente invention, le terme « produit » englobe un objet individuel ou plusieurs objets regroupés ensemble, notamment sous forme de lot ou fardeau. Un tel produit est un récipient, comme une bouteille ou un flacon, ou encore une brique ou une canette. Un produit peut être en tout type de matériau, notamment en matériau plastique, en métal ou encore en verre. Un produit peut être rigide ou semi-rigide.

Un tel récipient est destiné à contenir, de façon non exhaustive, un fluide, un liquide, des poudres ou des granulés, notamment de type agroalimentaire ou cosmétique.

Dans le cadre de l'invention, un produit peut présenter tout type de forme, symétrique ou non, régulière ou irrégulière.

De manière connue, au sein d'une ligne industrielle, les produits peuvent recevoir plusieurs traitements successifs différents, allant de la fabrication du contenant par une opération de formage jusqu'au conditionnement en lots de plusieurs produits regroupés, en passant notamment par le remplissage. A l'issue de ces traitements, les produits sont dits "finis".

Au cours de ces différentes étapes, les produits sont transportés selon une direction de déplacement, depuis l'amont vers l'aval, entre différents postes dédiés à chaque traitement que doivent subir les produits. Un tel transport s'effectue par l'intermédiaire d'un dispositif de convoyage.

Un dispositif de convoyage est pourvu d'au moins un convoyeur mobile selon ladite direction de déplacement, assurant le transport d'un flux de produits depuis un poste amont vers un poste aval. DE 10 2012 004473 A1 divulgue le préambule des revendications 1 et 10.

Un exemple de convoyeur est pourvu d'une surface mobile, de type à bande sans fin, en face supérieure de laquelle les produits reposent sur leur fond. Le déplacement de ladite surface mobile assure alors le convoyage du flux de produits.

Plus spécifiquement, au moins un poste amont peut alimenter en entrée le dispositif de convoyage selon un flux de produits, soit de façon unifilaire à savoir un par un à la suite les uns des autres sur une file, soit selon plusieurs files côte à côte, de façon « plurifilaire ». En raison de la cadence de production liée à ce poste amont, le dispositif de convoyage doit maintenir une vitesse de transport, proportionnelle au débit de produits fourni par ledit poste amont. A titre d'exemple, un poste amont peut être une remplisseuse, effectuant un traitement à l'unité de chaque produit, qu'elle délivre, en fonctionnement normal, selon un flux continu à intervalles réguliers.

De façon similaire, le poste aval est approvisionné selon ledit flux de produits transportés par le dispositif de convoyage. Ce poste aval possède une cadence de fonctionnement qui lui est propre, dépendant notamment du nombre de produits qu'il doit traiter simultanément. Dès lors, il est nécessaire de synchroniser entre eux les postes amont et aval, ainsi que la vitesse de transport du dispositif de convoyage, afin de maintenir un approvisionnement continu en produits vers ledit poste aval. Généralement, au sein d'une ligne industrielle, c'est le poste avec la cadence la moins élevée qui impose son rythme aux autre postes de la ligne. A titre d'exemple, un poste aval peut être une étiqueteuse traitant successivement chacun des produits, ou bien une fardeleuse destinée à enrober et maintenir un lot de plusieurs produits regroupés.

Afin d'améliorer la souplesse dans le fonctionnement d'une ligne de production, des postes intermédiaires permettent d'accumuler une quantité de produits, entre un poste amont et un poste aval. Un tel poste permet de gérer des cadences momentanément différentes d'une machine à une autre, de limiter la perte de productivité liée à un dysfonctionnement momentané d'un poste amont ou aval et de permettre la vidange du poste amont. A titre d'exemple les postes d'accumulation permettent de constituer une réserve de produits et d'assurer pendant un laps de temps un approvisionnement continu dudit poste aval, même en cas de dysfonctionnement ou de ralentissement d'un poste amont, ou encore au moment de la vidange d'une machine.

Dans ce contexte, on comprend qu'il est nécessaire de contrôler le flux de produits transportés par le dispositif de convoyage, afin de s'assurer de la continuité dudit flux, en particulier du nombre de produits présents dans chaque file. En particulier, il convient de s'assurer de la présence du bon nombre de produits, avec, le cas échéant, la quantité requise par file, pour éviter un déséquilibre entre les files qui serait préjudiciable au traitement en aval, notamment lorsque le poste aval est une fardeleuse ou une encaisseuse.

En effet, il arrive qu'un produit soit éjecté ou retiré du flux de produits, en raison d'une non-conformité ou bien lors d'un échantillonnage, par exemple pour un contrôle qualité, générant un espacement préjudiciable dans le flux alimentant le poste aval.

En outre, dans le cas d'un flux compact de produits, où ils sont accolés les uns aux autres, en « touche-touche », un éventuel ralentissement ou arrêt provisoire du poste amont peut générer un espacement indésirable entre certains produits dudit flux. Au contraire, lorsque c'est le poste aval qui est défaillant, un bourrage de produits peut avoir lieu. En particulier, certains traitements comme le fardelage ou l'encaissage de groupes de produits, nécessitent un flux compact avec des produits accolés les uns à la suite des autres, en « touche-touche » avec dans chaque file, le même nombre de produits. Dans de telles zones, où il est souhaité que les produits soient en « touche-touche », il est donc nécessaire de contrôler que c'est effectivement le cas.

Actuellement, un comptage des produits est effectué au moyen d'un capteur par file. Un tel capteur détecte généralement par le côté les produits lors de leur défilement, ciblant le corps de chaque produit passant en vis-à-vis dudit capteur.

Une telle solution présente plusieurs inconvénients. Tout d'abord, le capteur étant positionné à un emplacement du convoyeur, aucun contrôle n'est effectué en aval du capteur, ce qui ne permet pas d'assurer la vérification de la continuité d'un flux si un produit est prélevé après le passage dudit capteur. On ne peut donc pas s'assurer, à moins de multiplier le nombre de capteurs, que chaque file contient bien le même nombre de produits.

De surcroît, il est parfois nécessaire de régler la position des capteurs en fonction du type de produits à détecter, ce qui engendre une perte de temps lors du passage entre deux productions de formats différents de produits.

Par exemple, dans le cas de produits avec des formes spécifiques, notamment un corps avec une partie concave, un capteur positionné sur le côté avec un faisceau orienté latéralement vers le corps des produits, est susceptible de détecter un espacement entre des produits, du fait de leur concavité, alors qu'ils sont bien accolés. Dans un tel cas de figure, le réglage de chaque capteur devient complexe et génère souvent des erreurs de détection.

L'invention a pour but de pallier au moins en partie les inconvénients de l'état de la technique en proposant un dispositif de convoyage assurant un comptage systématique des produits présents à tout instant au sein d'au moins une zone. Dès lors, même en cas de prélèvement, par exemple manuellement par un opérateur, le comptage des produits est immédiatement actualisé.

Par ailleurs, le fait de compter les produits dans une zone prédéfinie, plutôt que d'évaluer leur espacement à l'aide de cellules de détection de présence, permet de s'affranchir des inconvénients précités liés au réglage souvent nécessaires lors d'un changement de format, et de déterminer aisément si les produits sont accolés ou non. Pour ce faire, l'invention concerne un dispositif de convoyage de produits au sein d'une ligne industrielle, comprenant au moins un convoyeur transportant un flux de produits selon au moins une file.

Ledit dispositif de convoyage est caractérisé en ce qu'il comprend :
- au moins une zone principale délimitée par des balises primaires et couvrant un tronçon dudit flux ;et
- au-dessus dudit convoyeur, au moins un organe de détection desdites balises primaires et de comptage du nombre de produits au moins à l'intérieur de ladite zone principale.

Selon des caractéristiques additionnelles, non limitatives, ladite zone principale peut être délimitée par au moins deux balises primaires positionnées à chaque extrémité amont et aval de ladite zone principale.

Ledit dispositif de convoyage peut comprendre une zone supplémentaire située en amont de ladite zone principale et couvrant un autre tronçon dudit flux ; ladite zone supplémentaire étant délimitée par au moins une balise primaire de ladite zone principale et par au moins une balise primaire supplémentaire située à l'extrémité amont de ladite zone supplémentaire ; ledit organe assurant la détection de ladite au moins une balise primaire supplémentaire et le comptage du nombre de produits à l'intérieur de ladite zone supplémentaire.

Ledit flux peut comprendre plusieurs files de produits ; chaque file étant délimitée par au moins deux couples de balises secondaires alignées longitudinalement, lesdits couples étant disposés de part et d'autre de chaque file ; ledit organe assurant alors la détection desdites balises secondaires et le comptage du nombre de produits pour chacune desdites files.

Ledit dispositif de convoyage peut comprendre des guides longitudinaux, délimitant un couloir de guidage pour chaque file de produits ; lesdites balises secondaires étant fixées sur lesdits guides longitudinaux.

La zone principale peut comprendre une extrémité aval de sortie vers un poste aval.

Ledit dispositif de convoyage peut comprendre des moyens de comparaison du nombre de produits de chaque zone et de chaque file par rapport à au moins une valeur déterminée ; lesdits moyens de comparaison comprenant un moyen d'émission d'une notification.

Ledit organe de détection et de comptage peut comprendre au moins un faisceau couvrant au moins ladite zone principale.

Ledit organe de détection et de comptage peut être une caméra.

L'invention concerne aussi un procédé de convoyage produits au sein d'une ligne industrielle, dans lequel on transporte par au moins un convoyeur un flux de produits selon au moins une file.

Ledit procédé de convoyage est caractérisé en ce qu'il comprend au moins les étapes suivantes :
- on délimite par des balises primaires au moins une zone principale couvrant un tronçon dudit flux ;
- on détecte lesdites balises primaires et on compte le nombre de produits au moins dans ladite zone principale.

Selon des caractéristiques additionnelles, non limitatives, on peut délimiter par des balises primaires supplémentaires au moins l'extrémité amont d'une zone supplémentaire en amont de ladite zone principale ;
- on détecte alors lesdites balises primaires supplémentaires ;
- on compte le nombre de produits dans ladite zone supplémentaire.

Ledit flux peut comprendre plusieurs files et on peut délimiter chaque file par au moins deux couples de balises secondaires alignées longitudinalement, lesdits couples étant disposés de part et d'autre de chaque file ;
- on détecte alors lesdites balises secondaires et on compte les produits de chaque file.

On peut effectuer une comparaison du nombre de produits de chaque zone et de chaque file par rapport à au moins une valeur déterminée ; et on peut émettre une notification en fonction de ladite comparaison.

Ainsi, au travers de l'utilisation de balises pour définir une ou plusieurs zones et d'un organe de détection desdites balises et de comptage des produits dans chaque zone et, le cas échéant, par file, il n'est plus nécessaire de régler une cellule de détection des produits, notamment lors du changement de formats de produits.

En outre, l'invention permet avantageusement de réguler la vitesse du convoyeur, pour assurer l'accumulation des produits avant un poste aval jusqu'à un endroit souhaité, lorsque le poste aval nécessite un approvisionnement de produits accumulés à son entrée.

Par ailleurs, lors d'un flux de produits plurifilaire, l'invention permet avantageusement de s'assurer d'alimenter le même nombre de produits dans chaque file.

D'autres caractéristiques et avantages de l'invention ressortiront de la description détaillée qui va suivre des modes de réalisation non limitatifs de l'invention, en référence aux figures annexées, dans lesquelles :

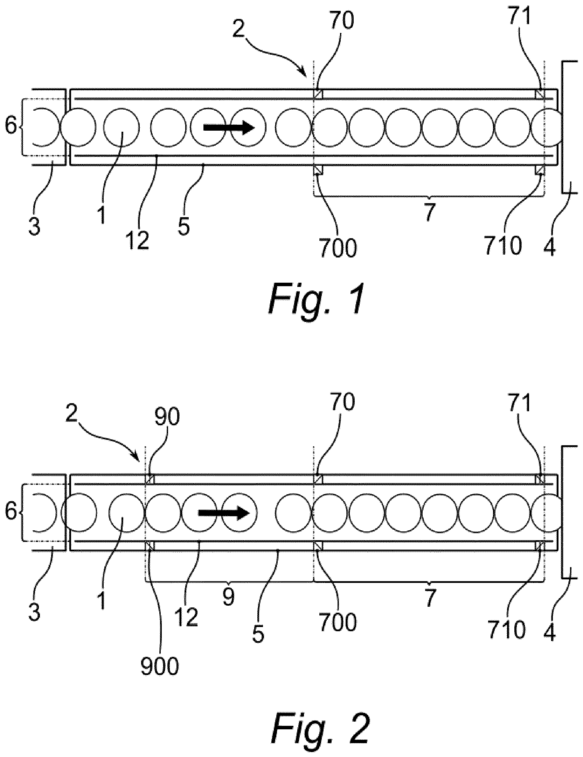

La figure 1 représente schématiquement une vue simplifiée en élévation d'un premier mode de réalisation d'un dispositif selon l'invention, montrant notamment le convoyage d'un flux de produits selon une unique file, dont un tronçon arrive en entrée d'un poste aval au sein d'une seule zone principale délimitée par des balises primaires ;
La figure 2 représente schématiquement une vue simplifiée en élévation d'un deuxième mode de réalisation dudit dispositif, montrant notamment un flux unifilaire de produits comprenant, d'une part, un premier tronçon en entrée d'un poste aval dans une zone principale délimitée par des balises primaires et, d'autre part, un autre tronçon amont au sein d'une zone supplémentaire délimitée par les balises primaires situées au début de ladite zone principale et par des balises primaires supplémentaires situées en amont ;

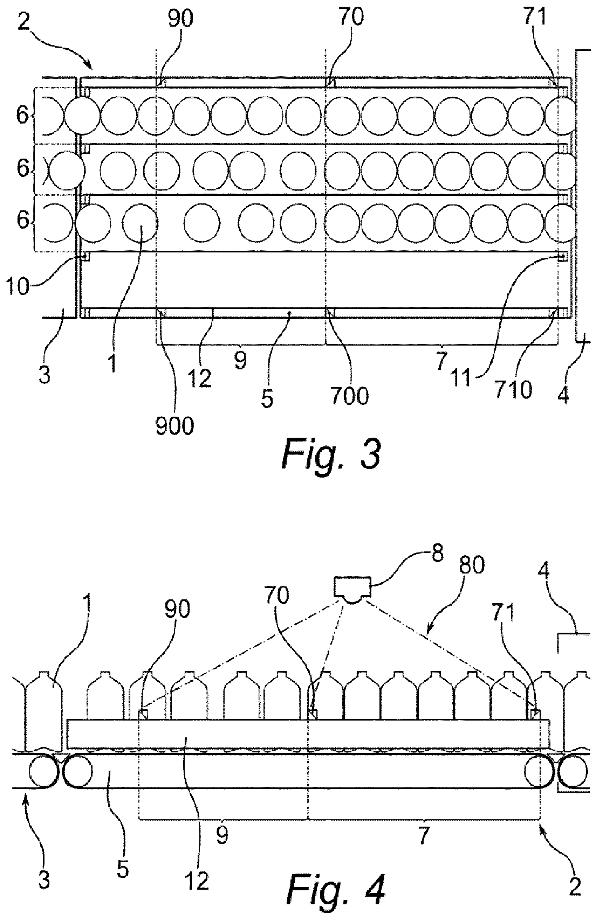

La figure 3 représente schématiquement une vue simplifiée en élévation d'un troisième mode de réalisation dudit dispositif, montrant notamment le convoyage d'un flux de produits selon trois files successivement au sein d'une zone supplémentaire et de la zone principale ; et
La figure 4 représente schématiquement une vue simplifiée de côté de la figure 3, montrant notamment l'organe de détection et de comptage couvrant ladite zone supplémentaire et ladite zone principale.

La présente invention concerne le convoyage de produits 1 au sein d'une ligne industrielle.

Un tel produit 1 est un objet individuel ou plusieurs objets regroupés ensemble, notamment sous forme de lot ou fardeau. Un produit 1 est un récipient, comme une bouteille ou un flacon, ou encore une brique ou une canette. Un tel récipient est destiné à contenir, de façon non exhaustive, un fluide, un liquide, des poudres ou des granulés, notamment de type agroalimentaire ou cosmétique.

Un produit 1 peut être en tout type de matériau, notamment en matériau plastique, en métal ou encore en verre. Un produit 1 peut être rigide ou semi-rigide. Il peut présenter tout type de forme, symétrique ou non, régulière ou irrégulière.

Le convoyage de produits 1 s'effectue selon une direction de déplacement, essentiellement longitudinale, depuis l'amont vers l'aval, entre différents postes dédiés à chaque traitement que doivent subir les produits 1.

Un tel transport de produits 1 s'effectue par l'intermédiaire d'un dispositif 2 de convoyage.

Le dispositif 2 permet en principe d'assurer le déplacement d'un flux de produits 1 entre un poste amont 3 et un poste aval 4. En particulier, le poste amont 3 peut être une unité de traitement, comme une remplisseuse, ou bien une surface d'accumulation des produits 1, voire un autre moyen de convoyage. Le poste aval 4 peut par exemple être une unité de traitement, en particulier de conditionnement de plusieurs produits 1 regroupés, notamment une fardeleuse ou une encaisseuse, ou bien une surface d'accumulation, voire un autre moyen de convoyage.

Le dispositif 2 de convoyage comprend alors au moins un convoyeur 5. Un tel convoyeur 5 peut être de tout type, de préférence pourvu d'un ou plusieurs tapis à bande sans fin. Plusieurs convoyeurs 5 peuvent être aboutés les uns à la suite des autres, notamment séparés par une plaque de transfert. Plusieurs convoyeurs 5 peuvent aussi être positionnés les uns à côté des autres, transversalement par rapport à la direction longitudinale de déplacement. En particulier, le dispositif 2 de convoyage peut comprendre un convoyeur 5 par file de produits 1 transportés.

En entrée, un tel convoyeur 5 est alimenté en produits 1 par le poste amont 3 et en sortie, il approvisionne le poste aval 4 en produits 1.

En particulier, le convoyeur 5 assure le déplacement du flux de produits 1 selon au moins une file 6. Un tel convoyage unifilaire est notamment représenté sur les figures 1 et 2. Le convoyeur 5 peut aussi assurer le transport d'un flux plurifilaire, à savoir de plusieurs files 6 de produits 1, les files 6 s'étendant longitudinalement et parallèlement ou sensiblement parallèlement les unes par rapport aux autres.

Avantageusement, l'invention prévoit d'assurer un approvisionnement du poste aval 4 selon un flux compact de produits 1, à savoir que les produits 1 doivent être accolés dans chaque file les uns derrière les aux autres ou au plus proches les uns derrière les autres, en « touche-touche ». Dès lors, il est nécessaire de contrôler cet aspect compact du flux de produits 1 juste avant leur arrivée au poste aval 4 en vue de leur traitement.

Pour ce faire, le dispositif 2 de convoyage comprend au moins une zone 7 principale, couvrant un tronçon du flux dans laquelle on vérifie certains aspects, comme notamment le nombre de produits 1 présents.

On notera qu'un tronçon du flux s'étend transversalement, sur toute la largeur dudit flux, et donc dudit convoyeur 5, englobant toutes les files de produits 1 et sur une longueur donnée déterminée par la longueur de la zone 7 correspondante. Un flux comprend alors plusieurs tronçons successifs, aboutés longitudinalement les uns aux autres.

Le dispositif 2 de convoyage peut comprendre plusieurs zones s'étendant le long du convoyeur 5. En particulier, plusieurs zones peuvent se succéder, espacées ou accolées longitudinalement les unes par rapport aux autres. Dès lors, la zone 7 principale se situe le plus en aval. De plus, chaque zone couvre un tronçon différent dudit flux de produits 1 circulant au sein dudit dispositif 2 de convoyage.

Préférentiellement, la zone 7 principale peut comprendre une extrémité aval de sortie vers un poste 4 aval, en particulier vers un poste de traitement, de préférence, un poste de conditionnement de type fardeleuse ou encaisseuse.

Une telle zone 7 principale est délimitée par des balises 70,71 primaires. Ces dernières font donc partie du dispositif 2 de convoyage.

Préférentiellement, ladite au moins une zone 7 principale est délimitée par au moins deux balises primaires 70,71 positionnées à chaque extrémité amont et aval de ladite zone 7 principale. En d'autres termes, au moins une balise 70 primaire amont correspond au début de la zone 7 principale, tandis qu'au moins une balise 71 primaire aval correspond à la fin de ladite zone 7 principale. La zone 7 principale se trouve donc entre les balises 70,71 primaires. Une telle configuration avec une zone 7 principale délimitée par deux balises 70,71 primaires est notamment visible sur la figure 4. Dès lors, la zone 7 principale est délimitée par des droites virtuelles passant par lesdites balises 70,71 primaires et s'étendant transversalement, de préférence orthogonalement, par rapport à la direction longitudinale de déplacement des produits 1.

Selon différents modes de réalisation, notamment visibles sur les figures 1 à 3, la zone 7 principale présente une forme globalement parallélépipédique rectangle. La zone 7 principale est alors délimitée par quatre balises 70,71,700,710 situées dans ses coins. En d'autres termes, d'une part, une balise 70 primaire amont située à gauche par rapport à la direction de déplacement (i.e. en haut sur les figures) et une balise 700 primaire amont située à droite (i.e en bas), délimitent le début de la zone 7 principale. D'autre part, une balise 71 primaire aval située à gauche par rapport à la direction de déplacement (i.e. en haut) et une balise 710 primaire aval située à droite (i.e. en bas), délimitent la fin de la zone 7. En outre, les balises 70,700 amont sont positionnées en vis-à-vis l'une de l'autre, à savoir en alignement transversalement par rapport à la direction de déplacement. Il en est de même pour les balises 71,710 primaires aval.

En outre, une ou plusieurs des balises 70,700,71,710 primaires peuvent être montées en fixation sur une structure adaptée, comme par exemple directement sur le châssis du convoyeur 5 ou bien sur des rails prévus à cet effet, ajoutés au dispositif 2 de convoyage. Une telle fixation peut être prévue amovible ou ajustable, notamment afin de régler l'écartement, dans un cas, entre la balise 70 primaire amont et la balise 71 primaire aval, modifiant ainsi la largeur de la zone 7 principale, ou bien dans un autre cas, entre les balises 70,700 primaires amont et les balises 71,710 primaires aval, augmentant ou diminuant la longueur de la zone 7 principale.

De façon similaire, une ou plusieurs des balises 70,700,71,710 primaires peuvent être réglables en hauteur, notamment par rapport au plan de transport des produits 1, s'étendant parallèlement ou essentiellement parallèlement à la surface du convoyeur 5.

Avantageusement, l'invention prévoit de déterminer le nombre de produits 1 présents dans au moins ladite zone 7 principale.

En particulier, ladite zone 7 principale peut être une zone dont on connaît les dimensions et dans laquelle on souhaite qu'il y ait un certain nombre de produits 1. Par exemple, il peut être souhaitable, pour le bon fonctionnement d'un poste 4 aval, que dans chaque file 6, les produits soient accumulés, c'est-à-dire que chaque produit 1 soit en contact avec le produit 1 qui le suit directement. Plus précisément, on peut choisir la longueur de la zone 7 pour qu'elle corresponde à la longueur sur laquelle on souhaite que les produits soient accumulés dans chaque file 6. Par conséquent, on détermine alors le nombre de produits 1 présents théoriquement au sein de la zone 7 principale, en vue d'alimenter convenablement le poste aval 4. Il est alors nécessaire de vérifier que le nombre exact de produits 1 qui se trouvent dans la zone 7 principale correspond bien au nombre théorique.

Pour ce faire, le dispositif 2 de convoyage comprend au moins un organe 8 de détection desdites balises 70,700,71,710 primaires et de comptage du nombre de produits 1 par zone, en particulier au moins à l'intérieur de ladite zone 7 principale. Avantageusement, l'organe 8 est situé au-dessus dudit convoyeur 5. Dès lors, ledit organe 8 peut, par le dessus, détecter et dénombrer tous les produits 1 présents dans ladite au moins zone 7 principale.

Plusieurs organes 8 peuvent être envisagés couvrant une ou plusieurs zones.

Selon un mode de réalisation, ledit au moins un organe 8 est positionné en élévation par rapport audit convoyeur 5 et comprend au moins un faisceau 80 couvrant au moins ladite zone 7 principale. Ledit faisceau 80 peut couvrir une ou plusieurs files 6 de ladite zone 7 principale. Un exemple de faisceau couvrant ladite zone 7 principale, mais aussi une autre zone située en amont, est notamment représentée sur la figure 4.

Ledit au moins un organe 8 peut être de tout type. A titre d'exemple, ledit organe 8 peut être un émetteur d'impulsion, notamment électromagnétique, un détecteur optique, comme un laser ; cet organe 8 peut interagir alors avec des étiquettes ou des marquages apposés sur chacun desdits produits 1, en vue de les dénombrer, toujours lorsqu'ils se trouvent dans ladite zone 7 principale.

Selon un mode préférentiel, l'organe 8 est une caméra. Le comptage des produits 1 peut alors s'effectuer par traitement informatique. Plus particulièrement, la caméra réalise des prises successives d'images d'au moins une zone. Ces images sont analysées par comparaison à des images préalablement enregistrées de produits 1 donnés, en vue d'effectuer une reconnaissance des profils des produits 1 transportés et ainsi les comptabiliser à un instant donné au sein d'une zone, en particulier de la zone 7 principale. La reconnaissance par caméra permet de prendre en considération de multiples paramètres, comme les caractéristiques liées aux produits 1, à savoir notamment plusieurs dimensions, surtout la longueur et/ou la largeur, leur forme, leurs couleurs, les éléments de bouchage, etc. Bien entendu, la caméra peut aussi reconnaître les produits 1 du fait que les caractéristiques de ces derniers soient préalablement enregistrées.

De plus, la détection par un organe 8 de type caméra permet de s'adapter aisément à un changement de format de produits 1 à convoyer. En effet, la reconnaissance effectuée par la caméra permet de déterminer le format des produits 1, en particulier de connaître ses dimensions, notamment en vue de régler le dispositif 2 de convoyage et ses différents éléments, de façon automatique ou bien manuellement en informant un opérateur des réglages à effectuer.

En outre, une telle détection par caméra s'effectue en permanence, sans laps de temps d'arrêt, permettant de connaître à tout instant le nombre de produits 1 reconnus et comptabilisés.

De plus, une telle reconnaissance visuelle peut être appliquée aux balises 70,700,71,710 primaires, en vue de les détecter et de délimiter la zone 7 principale, en vue de ne comptabiliser que les produits 1 reconnus par la caméra au sein de cette zone 7 principale.

A ce titre, les balises 70,700,71,710 primaires peuvent être de toute type. Préférentiellement, elles sont conformées ou comprennent un élément assurant leur détection par l'organe 8, préférentiellement par une caméra.

A titre d'exemple, une balise 70,700,71,710 primaire peut être un plot ou un marqueur, avec une forme spécifique, un motif particulier ou encore une couleur visuelle distincte. Une balise 70,700,71,710 primaire peut notamment comprendre un réflecteur agissant sur au moins une longueur d'onde du faisceau 80 de l'organe 8, pour assurer la mise en évidence de ladite balise 70,700,71,710 primaire lors de la détection.

Selon un mode de réalisation, comme visible sur les figures 2 à 4, le dispositif 2 de convoyage comprend une zone 9 supplémentaire située en amont de ladite zone 7 principale. Une telle zone 9 supplémentaire couvre un autre tronçon situé en amont et distinct par rapport au tronçon couvert par la zone 7 principale. Cet autre tronçon couvre aussi toute la largeur du flux circulant au travers du dispositif 2 de convoyage. En outre, la zone 7 principale et la zone 9 supplémentaire couvrent alors deux tronçons sur toute la largeur du flux de produits 1, préférentiellement deux tronçons successifs quand les zones 7,9 sont aboutées.

La zone 7 principale et la zone 9 supplémentaire sont forcément distinctes. Leurs surfaces peuvent se recouvrir mais elles sont préférentiellement non superposées.

De plus, à l'instar de la zone 7 principale, ladite deuxième zone 9 supplémentaire est délimitée par des balises primaires. Ces dernières font donc partie du dispositif 2 de convoyage.

La zone 9 supplémentaire peut présenter une forme similaire à celle de la zone 7 principale, avec des longueurs pouvant être distinctes. Les balises de la zone 9 supplémentaires peuvent être fixées de la même façon que pour la zone 7 principale.

Préférentiellement, la zone 9 supplémentaire est délimitée en aval par au moins une balise 70,700 primaire amont de ladite zone 7 principale et par au moins une balise 90 primaire supplémentaire située en amont de la zone 9 supplémentaire. Dans ce cas, la zone 7 principale et la zone 9 supplémentaire se succèdent directement l'une après l'autre, à savoir qu'elles sont contiguës, la fin de la zone 9 supplémentaire étant accolée au début de la zone 7 principale. En somme, la zone 9 supplémentaire partage sa au moins une balise aval avec au moins une balise 70,700 primaire amont de la zone 7 principale.

Plus avant, en référence aux figures 2 et 3, la zone 9 supplémentaire peut être délimitée, à son extrémité aval, par la balise 70 amont primaire gauche (i.e. en haut sur les figures) et par la balise 700 amont primaire droite (i.e. en bas), tandis qu'à son extrémité amont, par respectivement une balise 90 primaire supplémentaire gauche amont (i.e ; en haut) et une balise 900 primaire supplémentaire amont droite (i.e. en bas).

Selon un autre mode de réalisation, non représenté, la zone 9 supplémentaire est séparée de la zone 7 principale. La zone 9 supplémentaire comprend alors au moins deux balises primaires, plus précisément des balises primaires supplémentaires, chacune à une extrémité et délimitant le début et la fin de ladite zone 9 supplémentaire, notamment par l'intermédiaire de droites virtuelles s'étendant transversalement et passant par chacune desdites deux balises supplémentaires.

Préférentiellement, selon ce mode de réalisation, la zone 9 supplémentaire comprend quatre balises primaires supplémentaires qui lui sont propres, chacune des quatre balises primaires étant positionnées dans chacun des coins de ladite zone 9 supplémentaire, à savoir la balise 90 primaire supplémentaire amont gauche (i.e ; en haut) et la balise 900 primaire supplémentaire amont droite (i.e. en bas), mais aussi une balise primaire supplémentaire aval gauche (i.e ; en haut) et une balise primaire supplémentaire aval droite (i.e. en bas).

Dès lors, dans un cas comme dans l'autre, selon un mode de réalisation, l'organe 8 permet d'assurer la détection des balises 70,700,90,900 primaires de la zone 9 supplémentaire et d'y comptabiliser les produits 1 qui s'y trouvent. En particulier, le faisceau 80 de l'organe 8 couvre aussi au moins la zone 9 supplémentaire, qu'elle soit conjointe ou séparée de la zone 7 principale.

Selon un autre mode de réalisation, ladite zone 9 supplémentaire peut avoir son organe 8 propre pour détecter les balises primaires correspondantes et comptabiliser les produits 1 que s'y trouvent.

On notera qu'une balise 90,900 primaire supplémentaire peut être du même type qu'une balise 70,700,71,710 primaire telle que détaillée précédemment. Elle peut être identique ou avoir des caractéristiques différentes de détection.

Ainsi, l'invention permet de connaître la quantité et les positions des produits 1 en amont de la zone 7 principale, afin d'effectuer des ajustements éventuels en cas de produits 1 comptabilisés en quantité insuffisante ou bien trop nombreuse. En effet, le comptage des produits dans une zone 9 supplémentaire amont à la zone principale permet de vérifier que l'alimentation des produits 1 est correcte pour l'obtention du nombre souhaité de produits dans la zone 7 et ainsi d'anticiper une potentielle régulation. En effet, un trop grand nombre de produits 1 dans la zone supplémentaire 9 est susceptible d'entraîner une accumulation préjudiciable, notamment provoquer un bourrage du poste aval 3. A l'inverse une quantité insuffisante de produits 1 dans la zone supplémentaire 9 peut altérer le fonctionnement d'un poste 4 aval. Les ajustements permettent de conserver les caractéristiques voulues ou requises du flux de produits 1 dans la zone 7 principale. Un exemple d'ajustement peut consister à effectuer une régulation par contrôle la vitesse du convoyeur 5 ou d'un convoyeur supplémentaire propre à la zone 9 supplémentaire, notamment l'accélération dudit convoyeur supplémentaire ou du convoyeur 5, pour induire une accumulation des produits 1 s'ils sont trop peu nombreux dans la zone 9 supplémentaire, et inversement. Il est aussi possible de provoquer l'arrêt dudit convoyeur 5 pour forcer une accumulation des produits 1, ou encore commander une intervention en vue de rajouter ou supprimer un ou plusieurs produits 1, ou encore de les pousser, de façon manuelle par un opérateur ou bien par des moyens automatisés adaptés.

On notera que, pour des raisons de traçabilité, on préfère retirer un produit 1, pour conserver le caractère « premier entré, premier sorti » du flux de la production (ou FIFO pour « First In First Out »), plutôt que d'ajouter un produit 1 dont la provenance n'est pas certaine et non ordonnée.

En somme, on veut une quantité déterminée de produits 1 dans la zone 7 principale et comptabiliser les produits dans la zone 9 supplémentaire permet de savoir à l'avance si la quantité voulue dans la zone 7 principale sera respectée et d'intervenir en conséquence si tel n'est pas le cas.

Selon un autre mode de réalisation, une file 6 de produits 1 est délimitée par des balises secondaires. Ces dernières font donc partie du dispositif 2 de convoyage.

De telles balises secondaires peuvent correspondre aux balises 70,700,71,710,90,900 primaires.

Lorsque ledit flux comprend plusieurs files 6 de produits 1, c'est-à-dire, lorsque le flux est plurifilaire, deux files 6 adjacentes peuvent être délimitées par au moins deux balises 10,11 secondaires. En particulier, deux files adjacentes sont délimitées par au moins une balise 10 secondaire amont et au moins une balise 11 secondaire aval. On subdivise donc la ou les zones 7,9 en sous-zones à l'aide de balises 10,11 secondaires qui séparent et déterminent les files 6. En somme, on divise la ou les zones 7,9 en autant de tranches longitudinales correspondant aux files 6. Encore une fois, en fonction du nombre et de la position des files 6, certaines des balises 10,11 secondaires peuvent coïncider avec les balises 70,700,71,710,90,900 primaires.

De plus, lesdites deux balises 10,11 secondaires sont alignées longitudinalement ou sensiblement longitudinalement.

Préférentiellement, comme visible sur la figure 3, une balise 10 secondaire amont et une balise 11 secondaire aval sont situées proche, voire au niveau des extrémités amont et aval de la (des) zone(s) 7,9. Ainsi, lorsqu'il y a une zone principale 7 et une zone supplémentaire, la(les) balise(s) 10 secondaire(s) amont peu(ven)t se trouver en partie amont de la zone supplémentaire 9 et, la(les) balise(s) 11 secondaire(s) aval peu(ven)t se trouver en partie aval de la zone principale 7.

Dès lors, deux files 6 situées côté à côté sur la largeur du dispositif 2 de convoyage sont séparées par une droite virtuelle passant par lesdites balises 10,11 secondaires.

Dès lors, les balises 10,11 secondaires permettent de subdiviser longitudinalement la zone 7 principale et/ou la zone 9 supplémentaire en sous-zones couvrant chacune une file 6 de produits 1 dudit flux.

En particulier, chaque sous-zone d'une zone 7,9 peut correspondre à la portion d'une file 6 s'étendant sur la longueur de la zone 7,9 concernée. Ledit organe 8 assure alors aussi la détection desdites balises 10,11 secondaires. L'organe 8 permet alors de reconnaître chaque file 6 et de compter les produits 1 qui se situent dans chaque file 6, de part et d'autre de l'axe passant par les balises 10,11 secondaires.

De préférence, chaque file 6 est délimitée par au moins deux couples de balises 10,11 secondaires alignées longitudinalement, lesdits couples étant disposés de part et d'autre de chaque file 6.

On notera qu'une balise 10,11 secondaire peut être du même type qu'une balise 70,700,71,710 primaire ou différente. Elle peut être identique ou avoir des caractéristiques différentes de détection.

Comme évoqué précédemment, en fonction du nombre et de la position des balises 10,11 secondaires, il est possible de compter indépendamment pour chaque zone 7,9, les produits 1 dans chaque file 6, peu importe la configuration des zones 7,9.

A l'instar des balises 70,700,710,90,900 primaires, les balises 10,11 secondaires peuvent être prévues ajustables transversalement par rapport au dispositif 2 de convoyage, en particulier sa structure et son convoyeur 5. Ceci est particulièrement utile lors d'un changement de format qui modifie la largeur des files 6.

De même, la hauteur des balises 10,11 secondaires peut être réglée.

Une balise 10 secondaire amont et une balise 11 secondaire aval peuvent être reliées, pour que le déplacement transversal de l'une induise le même déplacement de l'autre. Chaque file 6 reste donc alignée longitudinalement.

Selon un mode de réalisation, le dispositif 2 de convoyage comprend des guides longitudinaux, délimitant un couloir de guidage pour chaque file 6 de produits 1. Dès lors, comme notamment visible sur la figure 3, lesdites balises 10,11 secondaires sont fixées sur des guides 12 longitudinaux. En somme, chaque file 6 est délimitée par deux guides 12, situés à gauche et à droite. En outre, deux files 6 adjacentes peuvent partager un guide 12 commun et sont considérées comme telles du fait de la détection des balises 10,11 secondaires positionnées sur un guide 12 correspondant.

De tels guides 12 longitudinaux peuvent prendre la forme de tiges, ou bien des plaques ou tôles, disposées verticalement. Deux guides 12 sont parallèles ou sensiblement parallèles entre eux. Deux guides 12 sont espacés d'un écartement déterminé en fonction d'une dimension des produits 1 à transporter, au jeu près, de manière à conserver les produits 1 alignés longitudinalement.

En effet, selon un mode de réalisation, des tels guides 12 peuvent être ajustés transversalement, de façon manuelle ou automatiquement, lors du changement de format des produits 1 à traiter. Dès lors, il n'est pas nécessaire de régler la position des balises 10,11 secondaires, puisqu'elles sont placées sur les guides 12 et que ce sont les positions de ces derniers qui sont réglées.

Ainsi, l'invention permet de comptabiliser les produits 1 présents dans chaque file 6 et de connaître la composition du flux sur sa largeur et détecter la présence d'un éventuel déséquilibre d'une des files 6 de produits 1 et d'intervenir le cas échéant dans chaque zone 7,9 et pour chaque file 6, comme évoqué précédemment. En particulier, l'intervention peut consister à ajouter ou à retirer un ou plusieurs produits 1 d'une file 6 qui comprend un nombre de produits différent de celui des autres files 6.

Plus avant, selon un mode de réalisation, le dispositif 2 de convoyage comprend des moyens de comparaison du nombre de produits de chaque zone 7,9 et de chaque file 6 par rapport à une valeur déterminée. De tels moyens de comparaison peuvent être logiciels, exécutés par des moyens informatiques dédiés : la valeur déterminée par zone 7,9 et par file 6 est donc enregistrée préalablement, par exemple au sein d'un gestionnaire de base de données, en vue d'être comparée avec l'une et/ou l'autre des valeurs mesurées en temps réel par l'invention, en particulier par l'organe 8, dans chaque zone 7,9 et chaque file 6 correspondante. En cas d'une différence de comparaison, il est donc alors possible d'intervenir.

Plus avant, pour un flux plurifilaire, il est ainsi possible de connaître le nombre de produits 1 dans chaque file 6, notamment dans la zone 9 supplémentaire, et de comparer chaque file 6, pour s'assurer que l'une ne contient pas davantage de produits 1 qu'une autre, même si les produits 1 de l'une et/ou l'autre des files 6 ne sont pas régulièrement disposés sur la longueur de ladite zone 9 supplémentaire.

En vue d'intervenir, lesdits moyens de comparaison comprennent alors un moyen d'émission d'une notification. Une telle notification peut simplement être une alerte, affichée sur un poste, comme l'unité centrale de commande de l'installation ou d'un poste, notamment le poste 3 amont ou le poste 4 aval. Cette notification peut aussi être envoyée vers un terminal portable, détenu par un opérateur, afin qu'il puisse intervenir manuellement pour, soit modifier le fonctionnement du dispositif 2 de convoyage, comme contrôler la vitesse du convoyeur 5 ou déclencher un moyen adapté pour notamment ajouter ou retirer un produit dans une zone 7,9, le cas échéant dans une file 6 donnée, soit intervenir manuellement pour ajouter, retirer ou pousser des produits 1 dans une file 6. La notification peut aussi correspondre à un signal de commande dudit moyen adapté, pour intervenir directement sans opérateur.

Ainsi, il est possible, d'une part, de réguler le transport du flux de produits 1 dans la(les) zone(s) 7,9, surtout dans la zone 9 supplémentaire, par contrôle de la vitesse d'avancement du convoyeur 5, lorsque le nombre de produits 1 ne correspond pas au nombre souhaité dans la(les) zone(s) 7,9. D'autre part, dans le cas d'un flux plurifilaire, il est possible de commander une intervention pour rééquilibrer l'une des files 6 dans l'une et/ou l'autre des zones 7,9, par ajout ou extraction de produits 1, de sorte qu'au sein de chaque zone 7,9, chaque file 6 comprenne le même nombre de produits 1.

L'invention concerne aussi un procédé de convoyage de produits 1 au sein d'une ligne industrielle.

Un tel procédé de convoyage peut être préférentiellement adapté à la mise en oeuvre du dispositif 2 de convoyage, tel que précédemment décrit.

Un tel procédé de convoyage comprend au moins les étapes suivantes.

Tout d'abord, on transporte par au moins un convoyeur 5 un flux de produits 1 selon au moins une file 6. Le flux peut alors être unifilaire comme visible notamment sur les figures 1 et 2.

Comme évoqué précédemment, le flux peut comprendre plusieurs files 6 de produits 1, comme notamment visible sur la figure 3.

Avantageusement, on délimite par des balises 70,700,71,710 primaires une zone 7 principale couvrant un tronçon dudit flux, à savoir une partie de la longueur du flux de produits 1 sur toute sa largeur.

De plus, on détecte lesdites balises 70,700,71,710 primaires et on compte le nombre de produits 1 au moins dans ladite zone 7 principale.

On peut alors effectuer une comparaison du nombre de produits 1 de ladite zone 7 principale par rapport à au moins une valeur déterminée, puis on émet une notification en fonction de ladite comparaison.

En outre, à l'émission de ladite notification, on peut contrôler la vitesse dudit au moins un convoyeur 5 en fonction du nombre de produits 1 comptés par zone 7 et pour ladite au moins une file 6, pour par exemple assurer une accumulation au moins au niveau de ladite zone 7 principale.

Bien entendu, si le résultat de la comparaison est valide, à savoir qu'il correspond aux attentes, alors il est possible d'informer sur la quantité juste de produits 1 comptabilisée, par exemple en affichant le nombre de produits 1 comptés, comme sur l'écran d'un terminal dédié.

Selon un mode de réalisation, on délimite par des balises 90,900 primaires supplémentaires une zone 9 supplémentaire en amont de ladite zone 7 principale. On compte alors le nombre de produits 1 dans ladite zone 9 supplémentaire. De plus, les balises 90,900 supplémentaires sont détectées.

La zone 9 supplémentaire couvre alors un autre tronçon dudit flux, situé en amont de ladite zone 7 principale.

Selon un mode de réalisation, lorsque le flux est plurifilaire, on délimite par des balises 10,11 secondaires deux files 6 adjacentes de produits 1. Préférentiellement, on délimite chaque file 6 par au moins deux couples de balises 10,11 secondaires alignées longitudinalement, lesdits couples étant disposés de part et d'autre de chaque file 6. On détecte alors lesdites balises 10,11 secondaires et on compte les produits 1 de chaque file 6.

En somme, les balises 70,700,710,90,900 primaires et les balises 10,11 secondaires sont détectées de façon à déterminer des aires virtuelles pour limiter le comptage des produits 1 à ceux qui s'y trouvent.

L'invention, au travers de son dispositif 2 de convoyage et de son procédé de convoyage, permet de connaître en temps réel et avec exactitude le nombre de produits 1 présents à un emplacement d'une ligne industrielle de production, dans des zones 7,9 dédiées et pour chaque file au sein des zones 7,9. Il est ainsi notamment possible de détecter :
- un déséquilibre entre les files 6, en termes de nombre de produits 1, ou encore ;
- un approvisionnement trop rapide ou trop lent des produits ;
ces problèmes étant susceptibles d'entraîner un dysfonctionnement ou une altération du fonctionnement optimal de la ligne, en particulier du poste 4 aval. Ainsi, grâce à l'invention il est possible d'en être alerté au plus tôt, diminuant le temps d'intervention.

## Revendications

1. Dispositif (2) de convoyage de produits (1) au sein d'une ligne industrielle, comprenant au moins un convoyeur (5) transportant un flux de produits (1) selon au moins une file (6) ;
**caractérisé en ce que** ledit dispositif (2) de convoyage comprend :
- au moins une zone (7) principale délimitée par des balises (70,700,71,710) primaires et couvrant un tronçon dudit flux ;et
- au-dessus dudit convoyeur (5), au moins un organe (8) de détection desdites balises (70,700,71,710) primaires et de comptage du nombre de produits (1) au moins à l'intérieur de ladite zone (7) principale.

2. Dispositif (2) de convoyage selon la revendication précédente, **caractérisé en ce que** ladite zone (7) principale est délimitée par au moins deux balises (70,700,71,710) primaires positionnées à chaque extrémité amont et aval de ladite zone (7) principale.

3. Dispositif (2) de convoyage selon la revendication 1 ou 2, **caractérisé en ce qu'**il comprend une zone (9) supplémentaire située en amont de ladite zone (7) principale et couvrant un autre tronçon dudit flux ; ladite zone (9) supplémentaire étant délimitée par au moins une balise primaire (70,700) de ladite zone (7) principale et par au moins une balise (90,900) primaire supplémentaire située à l'extrémité amont de ladite zone (9) supplémentaire ; ledit organe (8) assurant la détection de ladite au moins une balise (90,900) primaire supplémentaire et le comptage du nombre de produits (1) à l'intérieur de ladite zone (9) supplémentaire.

4. Dispositif (2) de convoyage selon l'une quelconque des revendications précédentes, **caractérisé en ce que** ledit flux comprend plusieurs files (6) de produits (1) ; chaque file (6) étant délimitée par au moins deux couples de balises (10,11) secondaires alignées longitudinalement, lesdits couples étant disposés de part et d'autre de chaque file (6); ledit organe (8) assurant la détection desdites balises (10,11) secondaires et le comptage du nombre de produits (1) pour chacune desdites files (6).

5. Dispositif (2) de convoyage selon la revendication précédente, **caractérisé en ce qu'**il comprend des guides (12) longitudinaux, délimitant un couloir de guidage pour chaque file (6) de produits (1) ; lesdites balises (10,11) secondaires étant fixées sur lesdits guides (12) longitudinaux.

6. Dispositif (2) de convoyage selon l'une quelconque des revendications précédentes, **caractérisé en ce que** la zone (7) principale comprend une extrémité aval de sortie vers un poste (4) aval.

7. Dispositif (2) de convoyage selon l'une quelconque des revendications précédentes, **caractérisé en ce qu'**il comprend des moyens de comparaison du nombre de produits (1) de chaque zone (7,9) et de chaque file (6) par rapport à au moins une valeur déterminée ; lesdits moyens de comparaison comprenant un moyen d'émission d'une notification.

8. Dispositif (2) de convoyage selon l'une quelconque des revendications précédentes, **caractérisé en ce que** ledit organe (8) de détection et de comptage comprend au moins un faisceau (80) couvrant au moins ladite zone (7) principale.

9. Dispositif (2) de convoyage selon la revendication précédente, **caractérisé en ce que** ledit organe (8) de détection et de comptage est une caméra.

10. Procédé de convoyage de produits (1) au sein d'une ligne industrielle, dans lequel on transporte par au moins un convoyeur (5) un flux de produits (1) selon au moins une file (6) ;
**caractérisé en ce qu'**il comprend au moins les étapes suivantes :
- on délimite par des balises (70,700,71,710) primaires au moins une zone (7) principale couvrant un tronçon dudit flux ;
- on détecte lesdites balises (70,700,71,710) primaires et on compte le nombre de produits (1) au moins dans ladite zone (7) principale.

11. Procédé de convoyage selon la revendication précédente, **caractérisé en ce que** :
- on délimite par des balises (90,900) primaires supplémentaires au moins l'extrémité amont d'une zone (9) supplémentaire en amont de ladite zone (7) principale ;
- on détecte lesdites balises (90,900) primaires supplémentaires ;
- on compte le nombre de produits (1) dans ladite zone (9) supplémentaire.

12. Procédé de convoyage selon l'une quelconque des revendications 10 ou 11, **caractérisé en ce que** ledit flux comprend plusieurs files (6),
- on délimite chaque file (6) par au moins deux couples de balises (10,11) secondaires alignées longitudinalement, lesdits couples étant disposés de part et d'autre de chaque file (6) ;
- on détecte lesdites balises (10,11) secondaires et on compte les produits (1) de chaque file (6).

13. Procédé de convoyage selon l'une quelconque des revendications 10 à 12, **caractérisé en ce qu'**on effectue une comparaison du nombre de produits (1) de chaque zone (7,9) et de chaque file (6) par rapport à au moins une valeur déterminée ; et on émet une notification en fonction de ladite comparaison.

## Patentansprüche

1. Vorrichtung (2) zum Fördern von Produkten (1) innerhalb einer industriellen Linie, die mindestens einen Förderer (5) umfasst, der einen Strom von Produkten (1) in mindestens einer Reihe (6) transportiert;
**dadurch gekennzeichnet, dass** die Fördervorrichtung (2) umfasst:
- mindestens einen Hauptbereich (7), der von primären Markierungen (70, 700, 71, 710) begrenzt wird und einen Teilabschnitt des Stroms bedeckt; und
- oberhalb des Förderers (5) mindestens ein Organ (8) zur Detektion der primären Markierungen (70, 700, 71, 710) und Zählung der Anzahl von Produkten (1) mindestens im Inneren des Hauptbereichs (7).

2. Fördervorrichtung (2) nach dem vorhergehenden Anspruch, **dadurch gekennzeichnet, dass** der Hauptbereich (7) von mindestens zwei primären Markierungen (70, 700, 71, 710) begrenzt wird, die an jedem stromaufwärtigen und stromabwärtigen Ende des Hauptbereichs (7) positioniert sind.

3. Fördervorrichtung (2) nach Anspruch 1 oder 2, **dadurch gekennzeichnet, dass** sie einen zusätzlichen Bereich (9) umfasst, der sich stromaufwärts des Hauptbereichs (7) befindet und einen weiteren Teilabschnitt des Stroms bedeckt; wobei der zusätzliche Bereich (9) von mindestens einer primären Markierung (70, 700) des Hauptbereichs (7) und von mindestens einer zusätzlichen primären Markierung (90, 900), die sich am stromaufwärtigen Ende des zusätzlichen Bereichs (9) befindet, begrenzt wird; wobei das Organ (8) die Detektion der mindestens einen zusätzlichen primären Markierung (90, 900) und die Zählung der Anzahl von Produkten (1) im Inneren des zusätzlichen Bereichs (9) sicherstellt.

4. Fördervorrichtung (2) nach einem der vorhergehenden Ansprüche, **dadurch gekennzeichnet, dass** der Strom mehrere Reihen (6) von Produkten (1) umfasst; wobei jede Reihe (6) von mindestens zwei Paaren von sekundären Markierungen (10, 11) begrenzt wird, die in Längsrichtung ausgerichtet sind, wobei die Paare beiderseits jeder Reihe (6) angeordnet sind; wobei das Organ (8) die Detektion der sekundären Markierungen (10, 11) und die Zählung der Anzahl von Produkten (1) für jede der Reihen (6) sicherstellt.

5. Fördervorrichtung (2) nach dem vorhergehenden Anspruch, **dadurch gekennzeichnet, dass** sie Längsführungen (12) umfasst, die einen Führungskanal für jede Reihe (6) von Produkten (1) begrenzen; wobei die sekundären Markierungen (10, 11) an den Längsführungen (12) befestigt sind.

6. Fördervorrichtung (2) nach einem der vorhergehenden Ansprüche, **dadurch gekennzeichnet, dass** der Hauptbereich (7) ein stromabwärtiges Austrittsende zu einer stromabwärtigen Station (4) hin umfasst.

7. Fördervorrichtung (2) nach einem der vorhergehenden Ansprüche, **dadurch gekennzeichnet, dass** sie Mittel zum Vergleich der Anzahl von Produkten (1) jedes Bereichs (7, 9) und jeder Reihe (6) mit mindestens einem bestimmten Wert umfasst; wobei die Mittel zum Vergleich ein Mittel zum Senden einer Benachrichtigung umfassen.

8. Fördervorrichtung (2) nach einem der vorhergehenden Ansprüche, **dadurch gekennzeichnet, dass** das Organ (8) zur Detektion und Zählung mindestens ein Strahlenbündel (80) umfasst, das mindestens den Hauptbereich (7) abdeckt.

9. Fördervorrichtung (2) nach dem vorhergehenden Anspruch, **dadurch gekennzeichnet, dass** das Organ (8) zur Detektion und Zählung eine Kamera ist.

10. Verfahren zum Fördern von Produkten (1) innerhalb einer industriellen Linie, bei welchem von mindestens einem Förderer (5) ein Strom von Produkten (1) in mindestens einer Reihe (6) transportiert wird;
**dadurch gekennzeichnet, dass** es mindestens die folgenden Schritte umfasst:
- mindestens ein Hauptbereich (7), der einen Teilabschnitt des Stroms bedeckt, wird durch primäre Markierungen (70, 700, 71, 710) begrenzt;
- die primären Markierungen (70, 700, 71, 710) werden detektiert, und die Anzahl von Produkten (1) mindestens in dem Hauptbereich (7) wird gezählt.

11. Förderverfahren nach dem vorhergehenden Anspruch, **dadurch gekennzeichnet, dass**:
- mindestens das stromaufwärtige Ende eines zusätzlichen Bereichs (9) stromaufwärts des Hauptbereichs (7) durch zusätzliche primäre Markierungen (90, 900) begrenzt wird;
- die zusätzlichen primären Markierungen (90, 900) detektiert werden;
- die Anzahl von Produkten (1) in dem zusätzlichen Bereich (9) gezählt wird.

12. Förderverfahren nach einem der Ansprüche 10 oder 11, **dadurch gekennzeichnet, dass** der Strom mehrere Reihen (6) umfasst,
- jede Reihe (6) von mindestens zwei Paaren von sekundären Markierungen (10, 11) begrenzt wird, die in Längsrichtung ausgerichtet sind, wobei die Paare beiderseits jeder Reihe (6) angeordnet sind;
- die sekundären Markierungen (10, 11) detektiert werden und die Produkte (1) jeder Reihe (6) gezählt werden.

13. Förderverfahren nach einem der Ansprüche 10 bis 12, **dadurch gekennzeichnet, dass** ein Vergleich der Anzahl von Produkten (1) jedes Bereichs (7, 9) und jeder Reihe (6) mit mindestens einem bestimmten Wert durchgeführt wird; und in Abhängigkeit von dem Vergleich eine Benachrichtigung gesendet wird.

## Claims

1. Device (2) for conveying products (1) in an industrial line, comprising at least one conveyor (5) transporting a stream of products (1) in at least one line (6);
**characterized in that** said conveying device (2) comprises:
- at least one main zone (7) delimited by primary beacons (70, 700, 71, 710) and covering a section of said stream; and
- above said conveyor (5), at least one member (8) for detecting said primary beacons (70, 700, 71, 710) and for counting the number of products (1) at least in said main zone (7).

2. Conveying device (2) according to the preceding claim, **characterized in that** said main zone (7) is delimited by at least two primary beacons (70, 700, 71, 710) positioned at each upstream and downstream end of said main zone (7).

3. Conveying device (2) according to Claim 1 or 2, **characterized in that** it comprises an additional zone (9) situated upstream of said main zone (7) and covering another section of said stream; said additional zone (9) being delimited by at least one primary beacon (70, 700) of said main zone (7) and by at least one additional primary beacon (90, 900) situated at the upstream end of said additional zone (9); said member (8) ensuring the detection of said at least one additional primary beacon (90, 900) and the counting of the number of products (1) in said additional zone (9).

4. Conveying device (2) according to any one of the preceding claims, **characterized in that** said stream comprises several lines (6) of products (1); each line (6) being delimited by at least two pairs of longitudinally aligned secondary beacons (10, 11), said pairs being positioned on either side of each line (6); said member (8) ensuring the detection of said secondary beacons (10, 11) and the counting of the number of products (1) for each of said lines (6).

5. Conveying device (2) according to the preceding claim, **characterized in that** it comprises longitudinal guides (12), delimiting a guiding corridor for each line (6) of products (1); said secondary beacons (10, 11) being fixed onto said longitudinal guides (12).

6. Conveying device (2) according to any one of the preceding claims, **characterized in that** the main zone (7) comprises a downstream output end to a downstream station (4).

7. Conveying device (2) according to any one of the preceding claims, **characterized in that** it comprises means for comparing the number of products (1) of each zone (7, 9) and of each line (6) to at least one determined value; said comparison means comprising a notification issuing means.

8. Conveying device (2) according to any one of the preceding claims, **characterized in that** said detection and counting member (8) comprises at least one beam (80) covering at least said main zone (7).

9. Conveying device (2) according to the preceding claim, **characterized in that** said detection and counting member (8) is a camera.

10. Method for conveying products (1) in an industrial line, wherein at least one conveyor (5) is used to transport a stream of products (1) in at least one line (6);
**characterized in that** it comprises at least the following steps:
- primary beacons (70, 700, 71, 710) are used to delimit at least one main zone (7) covering a section of said stream;
- said primary beacons (70, 700, 71, 710) are detected and the number of products (1) is counted at least in said main zone (7).

11. Conveying method according to the preceding claim, **characterized in that**:
- additional primary beacons (90, 900) are used to delimit at least the upstream end of an additional zone (9) upstream of said main zone (7);
- said additional primary beacons (90, 900) are detected;
- the number of products (1) in said additional zone (9) is counted.

12. Conveying method according to either one of Claims 10 and 11,
**characterized in that** said stream comprises several lines (6),
- each line (6) is delimited by at least two pairs of longitudinally aligned secondary beacons (10, 11), said pairs being positioned on either side of each line (6);
- said secondary beacons (10, 11) are detected and the products (1) of each line (6) are counted.

13. Conveying method according to any one of Claims 10 to 12,
**characterized in that** the number of products (1) of each zone (7, 9) and of each line (6) is compared to at least one determined value; and a notification is issued based on said comparison.
